# EUROPÄISCHE PATENTANMELDUNG

(11) **EP 1 403 141 A1**
(43) Veröffentlichungstag der Anmeldung: **31.03.2004**
(21) Anmeldenummer: 03019734.7
(22) Anmeldetag: 29.08.2003
(51) Int. Cl.: B60R 7/04, B60N 3/10

(54) **Ablagefach**

(30) Priorität: 24.09.2002 DE 10244485
(71) Anmelder: fischer automotive systems GmbH, 72160 Horb (DE); Bayerische Motoren Werke Aktiengesellschaft, 80788 München (DE)
(72) Erfinder: Schaal, Falk, 72275 Alpirsbach (DE); Nesch, Gerhard, 72184 Eutingen (DE); Mühlbauer, Josef, 84103 Postau (DE); Schreff, Reinhold, 84103 Postau (DE)

(57) **Zusammenfassung**

Die Erfindung betrifft ein Ablagefach (1) mit einer Schale (2) und einem Deckel (4), beispielsweise für den Einbau in ein Kraftfahrzeug. Es sind Ablagefächer bekannt, die in Zwei-Komponenten-Spritztechnik hergestellt sind und deren Schale (2) aus einem harten Kunststoff besteht und in ihrem Inneren stoffschlüssig eine Auskleidung (9) aus einem weicheren Kunststoff aufweist. Zur Belüftung eines derartigen Ablagefachs (1 ) ist eine möglichst einfache Dichtung zwischen Schale (2) und Deckel (4) erforderlich. Die Erfindung schlägt daher vor, dass der dem Deckel (4) zugewandte Rand der Auskleidung (9) als Dichtkante (7) ausgebildet ist, auf der eine Dichtungsfläche (8) des Deckels (4) aufsitzt.

## Beschreibung

Die Erfindung betrifft ein Ablagefach mit den Merkmalen des Oberbegriffs des Anspruchs 1.

Aus dem Stand der Technik sind eine Vielzahl verschließbarer Ablagefächer mit Deckel insbesondere für den Einbau in Kraftfahrzeuge bekannt. Aufgrund der Bewegungen und Vibrationen in Kraftfahrzeugen kommt es häufig zu Geräuschen durch Klappern von Gegenständen im Ablagefach. Daher werden derartige Fächer zum Teil in Zwei-Komponenten-Spritztechnik hergestellt und dabei ein harter Kunststoff, der die Schale bildet, mit einem weicheren Kunststoff, der das Innere des Ablagefachs auskleidet, kombiniert. Der weiche Kunststoff federt Stöße ab und dämpft gleichzeitig entstehende Geräusche, während der harte und feste Kunststoff für die erforderliche Stabilität sorgt.

Um den Inhalt eines Ablagefachs kühlen zu können, beispielsweise für Getränke, werden derartige Ablagefächer teilweise über einen Lüftungseinlass und einen Lüftungsauslass belüftet. Damit es nicht zu ungewünschten Geräuschen und einem unangenehmen Zug durch entweichende Luft kommt, muss zwischen Schale und Deckel eine Dichtung vorgesehen werden. Bekannt sind Lösungen, bei denen ein Dichtring oder dgl. als zusätzliches Teil in die Schale oder den Deckel eingelegt wird. Dies verursacht allerdings einen erheblichen Aufwand bei der Fertigung und Montage.

Der Erfindung liegt die Aufgabe zugrunde, für Ablagefächer mit weicher Auskleidung eine einfache Dichtung zwischen Deckel und Schale zu schaffen.

Diese Aufgabe wird erfindungsgemäß durch die Merkmale des Anspruchs 1 gelöst. Dabei wird der weichere Kunststoff, mit dem das Innere ausgekleidet ist, auch zur Ausbildung einer Dichtkante am oberen Rand der Auskleidung genutzt. Hierdurch entfällt ein zusätzliches Teil für die Dichtung der Schale gegen den Deckel. Am Deckel ist an entsprechender Stelle eine Dichtungsfläche angeordnet, auf der die Dichtkante aufsitzt.

Als weicherer Werkstoff wird vorzugsweise ein thermoplastisches Polyurethan verwendet.

Um die Dichtkante sicher zur Anlage an der Dichtungsfläche des Deckels zu bringen, ist die Dichtfläche in einer bevorzugten Ausführung als Schrägfläche ausgebildet. Hierdurch wird die Dichtkante beim Schließen des Deckels elastisch zur Seite gedrängt, wodurch eine durchgehende, flächige Anlage gewährleistet ist.

Die Erfindung wird nachfolgend anhand eines in der Zeichnung dargestellten Ausführungsbeispiels näher erläutert. Es zeigen:
- Figur 1: das verschließbare Ablagefach in einer perspektivischen Darstellungen sowie
- Figur 2: eine Schnittdarstellung des Ablagefachs.

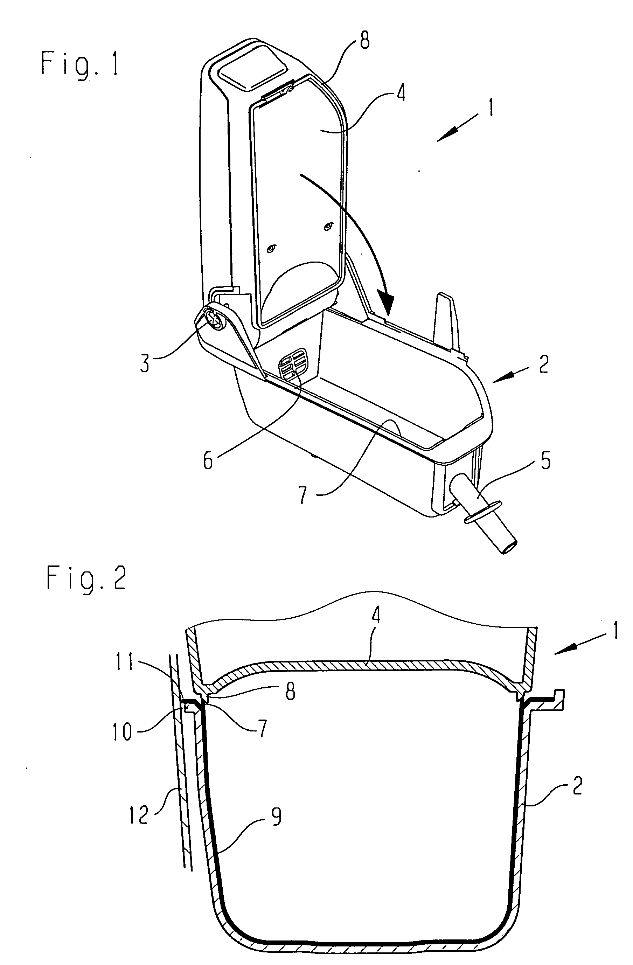

Das in Figur 1 dargestellte Ablagefach 1 weist eine Schale 2 auf, die mit einem über das Gelenk 3 schwenkbaren Deckel 4 schließbar ist. Das Ablagefach 1 ist beispielsweise für den Einbau in einem Kraftfahrzeug im Bereich der Mittelkonsole vorgesehen. Der Deckel 4 ist selbst ebenfalls als schließbares Ablagefach ausgeführt. Das Innere des Ablagefachs 1 kann über den Luftzuführstutzen 5 und Auslassöffnungen 6 belüftet werden, um beispielsweise eine (nicht dargestellte) Getränkedose zu kühlen. Um bei geschlossenem Ablagefach 1 einen Luftaustritt am Übergang zwischen Schale 2 und Deckel 4 zu verhindern, ist an der Schale 2 eine umlaufende Dichtkante 7 und am Deckel 4 eine umlaufende Dichtungsfläche 8 angeordnet.

Figur 2 zeigt das Ablagefach in einer Schnittdarstellung. Die Schale 2 und der Deckel 4 bestehen aus einem harten Kunststoff, beispielsweise auf Polycarbonat-Basis, und verfügen über die erforderliche Stabilität. Die Schale 2 weist eine Auskleidung 9 aus einem weicheren Kunststoff auf, beispielsweise Desmopan als thermoplastischem Polyurethan, die der Federung, Dämpfung und Geräuschdämmung bei sich im Ablagefach 1 bewegenden Gegenständen (nicht dargestellt) dient. Durch die Herstellung im Zwei-Komponenten-Spritzgießverfahren sind die Schale 2 und die Auskleidung 9 stoffschlüssig miteinander verbunden.

Auch die lippenförmige Dichtkante 7 ist aus dem weicheren Kunststoff hergestellt und als Teil der Auskleidung 9 ausgebildet. Beim Schließen des Deckels 4 kommt die Dichtkante 7 mit der Dichtungsfläche 8 in Kontakt und wird von dieser elastisch zur Seite gedrängt. Hierdurch kommt es zu einer durchgehenden, flächigen Anlage und damit zu einer guten Dichtwirkung. Ohne den Erfindungsgedanken zu verlassen, könnte auch der Deckel eine kantenartige Dichtfläche aufweisen, die beim Schließen in einen flächigen Rand der Auskleidung als Dichtpartner gepresst wird.

Die Auskleidung 9 ist außerdem über die Abschlusskante 10 in Form einer Toleranzausgleichskante 11 hinausgezogen. Dies dient dem Ausgleich toleranzbedingter Spalte zwischen dem Ablagefach 1 und einem angrenzenden Bauteil 12.

## Patentansprüche

1. Ablagefach mit Schale (2) und Deckel (4), wobei die Schale (2) des Ablagefachs (1) aus einem harten Kunststoff besteht und in ihrem Inneren stoffschlüssig eine Auskleidung (9) aus einem weicheren Kunststoff aufweist, **dadurch gekennzeichnet, dass** der dem Deckel (4) zugewandte Rand der Auskleidung (9) als Dichtkante (7) ausgebildet ist, auf der eine Dichtungsfläche (8) des Deckels (4) aufsitzt.

2. Ablagefach nach Anspruch 1, **dadurch gekennzeichnet, dass** die Auskleidung (9) aus einem thermoplastischen Polyurethan besteht.

3. Ablagefach nach Anspruch 1, **dadurch gekennzeichnet, dass** die Dichtungsfläche (8) des Deckels (4) als Schrägfläche ausgebildet ist.
